# EUROPÄISCHE PATENTSCHRIFT

(11) **EP 0 681 896 B1**
(45) Veröffentlichungstag und Bekanntmachung des Hinweises auf die Patenterteilung: **05.08.1998**
(21) Anmeldenummer: 95102872.9
(22) Anmeldetag: 01.03.1995
(51) Int. Cl.: B29B 17/02, B03B 9/06, B03B 5/32

(54) **Trennverfahren für Teppichböden**
Process for the separation of carpet materials
Procédé de séparation de matériaux de tapis

(30) Priorität: 10.05.1994 DE 4416466
(43) Veröffentlichungstag der Anmeldung: 15.11.1995
(73) Patentinhaber: Zimmer Aktiengesellschaft, D-60388 Frankfurt (DE)
(72) Erfinder: Dilly-Louis, Wolfgang, D-61169 Friedberg (DE); Seelig, Joachim, Dr., D-63599 Biebergemünd (DE); Wolf, Reinhard, D-63517 Rodenbach (DE)

(56) Entgegenhaltungen:
- WO-A-94/01219
- DE-A- 2 416 573
- DE-A- 4 033 701
- FR-A- 2 301 362
- GB-A- 2 191 118
- DATABASE WPI Section Ch, Week 8401, Derwent Publications Ltd., London, GB; Class JF, AN 84-004345 C01! & SU-A-1 000 071 (PENZA PENZKHIMMASH.) 5. März 1983

## Beschreibung

Die Erfindung betrifft ein Verfahren zur weitgehend sortenreinen Auftrennung von gebrauchten Teppichböden, vorzugsweise von Polyamid-Tufting-Teppichmaterialien, in drei Hauptkomponenten. Insbesondere betrifft die Erfindung die hydrodynamische Sortierung von zerkleinerten Teppichmaterialien.

Bei der Renovierung öffentlicher und privater Räume fallen größere Mengen an gebrauchten Teppichböden und an Verschnitt neuer Teppichmaterialien an, die der Wertstoff-Rückgewinnung zugeführt werden sollten. Eine ökonomisch sinnvolle Wiederverwertung setzt jedoch eine Auftrennung der Teppichmaterialien in die einzelnen Komponenten voraus. So besteht ein Tufting-Teppich im wesentlichen aus Polfasern aus Polyamid-6 oder Polyamid-6,6 oder auch aus Polyethylenterephthalat oder Polybutylenterephthalat, ferner aus einem Trägermaterial oder Tuftinggrund aus Polypropylen- und/oder Naturfasergewebe sowie aus einem Teppichrücken aus mit anorganischen Füllstoffen versetztem Synthese- oder Naturkautschuk, insbesondere mit Kreide gefülltem Styrol-Butadien-Latex-Schaum, oder einem Zweitrücken aus Polypropylen- oder Naturfasergewebe.

Es ist allgemein bekannt (K. R. Wolff, Chemiefasern/Textilindustrie, Bd. 30/82 [1980], Seiten 500 - 506 und E 68 - E 69), daß nahezu alle Arten von Polymer- und Faserabfällen aus Polyestern oder Polyamiden nach Zerkleinerung durch Schneiden sowie gegebenenfalls Trocknung und Vorverdichtung, in einem Spezialextruder kompaktiert, aufgeschmolzen und entgast werden können, um anschließend in eine Depolymerisationsanlage eingespeist zu werden. Nicht geschmolzene Teile werden vor der Depolymerisation abfiltriert, während depolymerisationsfremde Polymere erst nach der Depolymerisation von den erhaltenen Monomeren abgetrennt werden. Ein wesentlich höherer Bedarf an Reaktionsraum und Energie ist die Folge. Auch wird die Qualität der Fremdpolymere während der Depolymerisationsreaktion stark beeinträchtigt, so daß meist eine Wiederverwertung als Kunststoff nicht möglich ist.

Bei dem speziell auf Polyamid-6-Teppichmaterialien ausgerichteten Verfahren des US-Patentes 5 169 870 wird der vorzerkleinerte Teppich vor dem Kompaktieren und Aufschmelzen einer weiteren Zerkleinerung in trockener Phase durch Schreddern, Reißen und/oder Mahlen sowie einer aerogravimetrischen Trennung unterworfen. Bei dieser Zerkleinerung in der trockenen Phase ist die thermische Belastung der Polymere, besonders im Hinblick auf die für eine sinnvolle Partikelgröße notwendige lange Verweilzeit in der Zerkleinerungsvorrichtung, sehr hoch, was zu Anschmelzungen und folglich zu mechanisch nicht trennbaren Verbindungen zwischen den verschiedenen Komponenten führt. Auch sind Ausbeute und Selektivität in der Trennstufe, wegen der Form, der Oberflächenbeschaffenheit und der Verbindung des zu trennenden Materials (Faserknäuel, an Fasern angelagerte Partikel) eher unbefriedigend. Nach unseren Erfahrungen liegen Ausbeute und Reinheit der Komponenten bei jeweils 50 bis 80 Gew.-%, wobei insbesondere die geringe Reinheit eine direkte Wiederverwendung als Qualitätskunststoff ausschließt.

Die FR-A 2 301 362 beschreibt ein Verfahren, gemäß dem Teppichmaterial in trockener Phase in Stücke von 20 - 25 mm zerteilt wird, durch Behandlung der Stücke mit Wasser der Teppichrücken versprödet, die Fasern abgeschert, und die Suspension in einer Kegelschleuder in eine naße Latexschaum-Fraktion, die verworfen wird, und eine Faser-Fraktion, die nach Entwässerung zu Nadelfilz oder Vlies verarbeitet wird, aufgetrennt wird. Rückgewonnen wird ein Gemisch von Polfasern und Trägermaterial-Fasern. Eine weitere Auftrennung der Faser-Fraktion, die Voraussetzung für die Gewinnung von sortenreinem Granulat bzw. Depolymerisat wäre, ist nicht beabsichtigt und wird durch Agglomeratbildung der relativ langen Fasern sehr erschwert.

Die WO-A 94-01219 offenbart eine Doppelkonus-Schneckenzentrifuge mit einem konusförmigen Siebteil für die Auftrennung von Altkunststoff-Gemischen in Form von groben Stücken, Folien oder Granulat. Wegen der Verstopfungsgefahr der Siebbohrungen durch Faseragglomerate ist diese Zentrifuge für die Trennung von fasrigem Material wenig geeignet.

Aus der DE-A 29 26 233 ist ferner bekannt, polymerhaltige Stoffgemische, nach Suspendierung in einer geeigneten Flüssigkeit unter Einsatz von Hydrozyklonen zu zerlegen. Da im Hydrozyklon vornehmlich turbulente Strömungsverhältnisse herrschen, ist die Trennwirkung stark von der Partikelform, -verteilung und -größe abhängig. Während, zum Beispiel, bei zerkleinerten Polyesterflaschen-Abfällen gute Ergebnisse erzielt werden, sind fasrige Abfälle einschließlich Teppichabfällen auf diese Weise kaum aufzutrennen.

Aufgabe der vorliegenden Erfindung ist daher die Schaffung eines physikalischen Verfahrens zur Auftrennung von Teppichmaterialien in drei Hauptkomponenten, welches eine deutlich höhere Reinheit und Ausbeute der Komponenten ermöglicht als die bekannten Verfahren oder Trennvorrichtungen.

Die Lösung dieser Aufgabe erfolgt erfindungsgemäß nach den Angaben der Patentansprüche. Ausgehend von vorzerkleinerten Teppichabfällen wird in einer Schneidmühle oder einer gleichwertigen Schneidvorrichtung in flüssiger Phase eine wäßrige Suspension von feinzerkleinerten Teppichpartikeln erzeugt. Durch Zugabe einer wäßrigen Salzlösung wird die Dichte der flüssigen Phase der Suspension auf einen Wert eingestellt, der zwischen den Dichten von zwei Hauptkomponenten mit benachbarten Dichten liegt. Diese Suspension wird einer Doppelkonus-Vollmantel-Schneckenzentrifuge aufgegeben, wobei eine Trennung in eine im wesentlichen aus einer Hauptkomponente bestehende Fraktion und eine im wesentlichen aus den beiden anderen Hauptkomponenten bestehende Zwischenfraktion sowie eine Flüssigphase erfolgt. Die Zwischenfraktion wird ihrerseits in wäßriger Salzlösung mit definierter Dichte suspendiert und in einer Doppelkonus-Vollmantel-Schneckenzentrifuge in zwei jeweils im wesentlichen aus nur einer Hauptkomponente bestehende Fraktionen sowie eine Flüssigphase aufgetrennt. Die so abgetrennten Fraktionen werden individuell der Wiederverwertung zugeführt, während die Flüssigphasen prozeßintern rückgeführt werden.

Das erfindungsgemäße Verfahren eignet sich zur Aufarbeitung jeglicher Synthesefaser-Teppichmaterialien, bevorzugt von Tufting-Teppichen mit Polfasern aus Polyamid-6, Polyamid-6,6, Polyethylenterephthalat oder Polybutylenterephthalat einschließlich deren niedrigmodifizierte Copolymere sowie einem Trägergewebe aus Polypropylen und einem Teppichrücken aus mit anorganischen Füllstoffen versetzten synthetischem Kautschuk, meistens mit Kreide gefüllter Styrol-Butadien-Kautschuk-Schaum.

Die aufzutrennenden Teppichmaterialien werden zunächst in Stücke oder Streifen mechanisch vorzerkleinert, wobei diese Maßnahme lediglich dazu dient, die Beschickung der nachfolgenden Feinzerkleinerungsvorrichtung zu ermöglichen. Die Feinzerkleinerung erfolgt in einer handelsüblichen Schneidmühle oder einer anderen gleichwertigen Schneideinrichtung, wobei zur Vermeidung von Verklebungen durch thermische Belastung in flüssiger Phase unter Zufuhr von Wasser und/oder rückgeführter wäßriger Salzlösung gearbeitet wird. Eine Feststoffkonzentration im Bereich von 5 bis 50 Gew.-%, bevorzugt 10 bis 30 Gew.-%, hat sich bewährt. Diese Arbeitsweise ermöglicht sowohl eine Feinzerkleinerung unter thermisch schonenden Bedingungen als auch eine intensive Benetzung des Materials und eine Reinigung der Fasern von anhaftenden Verunreinigungen.

Der Austrag der Partikel aus der Feinzerkleinerungsvorrichtung erfolgt über ein Lochblech mit Bohrungen, die einen Durchmesser im Bereich von 3 bis 10 mm, vorzugsweise 5 bis 8 mm besitzen. Überraschenderweise liegen die geschnittenen Einzelpartikel in der wäßrigen Suspension nahezu materialeinheitlich vor, d. h., jedes der Einzelpartikel besteht im wesentlichen entweder aus Polfasern oder aus Trägergewebe oder aus Teppichrücken, nicht aber aus Verbunden dieser Komponenten.

Die wäßrige Suspension wird in einen Vorlagebehälter mit Rührwerk gefördert. In diesem Vorlagebehälter wird gleichzeitig die Feststoffkonzentration der Suspension auf einen Wert im Bereich von 1 bis 15 Gew.-%, vorzugsweise 3 bis 10 Gew.-%, abgesenkt, und die Dichte der flüssigen Phase der Suspension auf einen Wert, der vorzugsweise zwischen der höchsten und der zweithöchsten Dichte der Teppich-Hauptkomponenten liegt, eingestellt. Alternativ kann, wie weiter unten beschrieben, die Dichte auch auf einen Wert eingestellt werden, der zwischen der niedrigsten und der zweitniedrigsten Dichte der Hauptkomponenten liegt. Die spezifisch schwerste Teppich-Komponente ist normalerweise durch den Füllstoff bedingt der Teppichrücken mit einer Dichte von größenordnungsmäßig 2,0 kg/dm³. Die zweitschwerste Komponente bilden die Polfasern mit einer Dichte von etwa 1,35 kg/dm³ für Polyethylenterephthalat, etwa 1,31 kg/dm³ für Polybutylenterephthalat und etwa 1,15 kg/dm³ für Polyamid-6 und -6,6. Entsprechend wird bei der bevorzugten Verfahrensweise die Dichte der flüssigen Phase der Suspension bei Fasern aus Polyester auf einen Wert im Bereich von etwa 1,35 bis etwa 1,50 kg/dm³ und bei Polyamiden im Bereich von 1,16 bis etwa 1,30 kg/dm³ eingestellt (bei 20 °C).

Die Einstellung der Dichte unter gleichzeitiger Einstellung der Feststoffkonzentration erfolgt mit Hilfe einer wäßrigen Salzlösung, vorzugsweise Calciumchlorid oder Kaliumcarbonat, wobei die Konzentration der Salzlösung um so höher ist, je höher die einzustellende Dichte und je geringer die vorzunehmende Erniedrigung der Feststoffkonzentration. Sowohl für CaCl₂ · 2 H₂O als auch für K₂CO₃ · 1,5 H₂O liegt die Dichte (bei 20 °C) einer wäßrigen Lösung mit einer Konzentration von 30 Gew.-% bei etwa 1,28 kg/dm³ und von 40 Gew.-% bei etwa 1,4 kg/dm³ und das einer 50 Gew.-%igen wäßrigen K₂CO₃ · 1,5 H₂O Lösung bei 1,54 kg/dm³. Zweckmäßigerweise wird die wäßrige Salzlösung in Form einer Stammlösung mit definierter Dichte in einer separaten Salzlöseeinheit hergestellt. Der Zusatz geringer Mengen von weniger als 0,2 g/l eines handelsüblichen Benetzungsmittels und/oder Entschäumers empfiehlt sich.

Nach erfolgter Einstellung der Dichte und der Feststoffkonzentration wird die Suspension einer Doppelkonus-Vollmantel-Schneckenzentrifuge zugeführt. Mit diesen, seit einiger Zeit handelsüblichen Apparaten ist es möglich, den Anteil des Feststoffes mit einer höheren Dichte als die Flüssigphase von dem Anteil mit einer geringeren Dichte als die Flüssigphase sowie von der Flüssigphase selbst abzutrennen. Die beiden Feststoff-Fraktionen werden je nach Konsistenz der Partikel mit einer Restfeuchte im Bereich von 2 bis 25 % Gew.-% ausgetragen.

Bei der hier beschriebenen, bevorzugten Verfahrensweise besteht die schwerere Fraktion zu über 90 Gew.-% aus mit mineralischen Füllstoffen versetztem Synthese-Kautschuk, neben geringen Mengen Fasermaterial. Zwar liegt die Dichte von Synthese-Kautschuk größenordnungsmäßig bei nur etwa 1,0 kg/dm³, wegen der guten Verteilung und der großen Menge an Füllstoff, zum Beispiel Kreide mit einer Dichte von etwa 2,7 kg/dm³, ist die Teppichrücken-Komponente aber quantitativ in diesem Stoffstrom zu finden. Nach einer Trocknung kann diese Fraktion in einem Heizkraftwerk oder nach weiteren Aufbereitungsschritten erneut als Füllstoff verwertet werden.

Die aus wäßriger Salzlösung bestehende Flüssigphase wird in die Salzlöseeinheit rückgeführt, falls erforderlich nach Aufkonzentrierung entsprechend dem Salzgehalt der Stammlösung. Im letzteren Fall wird das von der Salzlösung abgedampfte Wasser ebenfalls in den Prozeß rückgeführt, vorzugsweise in die Feinzerkleinerungseinrichtung, wobei lediglich der mit den Feststoff-Fraktionen als Restfeuchte ausgetragene Anteil durch Frischwasser ergänzt werden muß. Alternativ kann der Feinzerkleinerungseinrichtung statt Wasser auch wäßrige Salzlösung zugeführt werden.

Die leichtere Feststoff-Fraktion besteht im wesentlichen aus den beiden anderen Hauptkomponenten und wird nachfolgend als Zwischenfraktion bezeichnet. Diese Zwischenfraktion wird in einem weiteren Vorlagebehälter mit Rührwerk in Wasser und/oder wäßriger Salzlösung suspendiert und die Dichte der flüssigen Phase auf einen Wert eingestellt, der zwischen den Dichten der beiden die Zwischenfraktion bildenden Hauptkomponenten liegt. In der Mehrzahl der Anwendungsfälle besteht eine dieser beiden Hauptkomponenten aus Polypropylen, dessen Dichte bei etwa 0,90 kg/dm³ liegt. In diesen Fällen kann mit einer Dichte der flüssigen Phase von etwa 1,0 kg/dm³, also mit Wasser ohne Salzzusatz, gearbeitet werden, wobei der Zwischenfraktion soviel Wasser zuzusetzen ist, daß die Feststoff-Konzentration der Suspension im Bereich von 1 bis 15 Gew.-%, vorzugsweise 3 bis 10 Gew.-%, liegt. Andernfalls erfolgt die Einstellung der Dichte der flüssigen Phase, wie zuvor geschildert, mittels wäßriger Salzlösung.

Die suspendierte Zwischenfraktion wird in einer weiteren Doppelkonus-Vollmantel-Schneckenzentrifuge in einen Feststoffanteil mit einem höheren Dichte als die Flüssigphase und in einen Feststoffanteil mit einer geringeren Dichte als die Flüssigphase sowie in eine flüssige Phase aufgetrennt. Je nach Beschaffenheit der Partikel liegt die Restfeuchte der beiden Feststoff-Fraktionen im Bereich von 2 bis 15 Gew.-%.

Die erstere dieser Feststoff-Fraktionen besteht bei einem Rückgewinnungsgrad von über 90 Gew.-% zu über 95 Gew.-% aus Polfasern, neben geringen Mengen Trägergewebe und Teppichrücken. Diese Fraktion kann unmittelbar einer Depolymerisationsanlage zugeführt werden, in der die den Fasern zugrunde liegenden Monomeren zurückgewonnen werden. Wegen ihrer geringen Menge belasten die Begleitstoffe (Trägergewebe und Teppichrücken sowie eventuell anhaftendes Salz) das Depolymerisations-Verfahren kaum, insbesondere wird kein zusätzliches Reaktorvolumen benötigt, und der Reaktionsrückstand ist im Vergleich zu den Verfahren des Standes der Technik gering. Alternativ kann diese Fraktion nach vorangehender Trocknung in der Schmelzphase zu Formkörpern verarbeitet werden.

Die andere Feststoff-Fraktion besteht zu über 95 Gew.-% aus Trägergewebe, meist Polypropylen, neben sehr geringen Mengen Polfasern und Teppichrücken. Da das Polypropylen während des Teppich-Trennverfahrens keiner nennenswerten thermischen und/oder chemischen Belastung ausgesetzt ist, kann dieses Polypropylen nach einer Trocknung problemlos einer Wiederverwertung im Nadelvlies- oder Faserbereich zugeführt oder als Granulat vermarktet werden.

Die flüssige Phase, meistens Wasser, wird erneut zur Suspendierung der Zwischenfraktion eingesetzt. Ein eventueller Überschuß kann in eine vorangehende Prozeßstufe rückgeführt werden.

Wie bereits erwähnt, kann die Dichte der flüssigen Phase der wäßrigen Suspension des feinzerkleinerten Teppichmaterials alternativ auch auf einen Wert eingestellt werden, der zwischen der niedrigsten und der zweitniedrigsten Dichte der Hauptkomponenten liegt. Meistens besteht die spezifisch leichteste Hauptkomponente aus Polypropylen und die zweitleichteste aus den Polfasern, so daß sich eine Dichte der flüssigen Phase von etwa 1,0 kg/dm³ empfiehlt. In diesem Fall erfolgt die Feinzerkleinerung des Teppichmaterials unter Zufuhr von ausschließlich Wasser, welches danach im Vorlagebehälter bis zu einer Feststoffkonzentration im Bereich von 1 bis 15 Gew.-% durch weiteres Wasser ergänzt wird. Bei der nachfolgenden Trennung mittels Doppelkonus-Vollmantel-Schneckenzentrifuge werden eine zu über 95 Gew.-% aus Polypropylen bestehende Fraktion und eine aus den beiden anderen Hauptkomponenten bestehende Zwischenfraktion sowie eine aus Wasser bestehende flüssige Phase erhalten.

Die Zwischenfraktion wird, wie zuvor beschrieben, in Wasser oder wäßriger Salzlösung suspendiert und die Dichte der flüssigen Phase mit wäßriger Salzlösung auf einen Zwischenwert eingestellt, der bei Polfasern aus Polyamiden im Bereich von 1,16 bis etwa 1,30 kg/dm³ und bei solchen aus Polyester im Bereich von etwa 1,35 bis etwa 1,50 kg/dm³ liegt. Danach wird die Suspension mittels Doppelkonus-Vollmantel-Schneckenzentrifuge in eine zu über 95 Gew.-% aus Polfasern bestehende Fraktion und eine zu über 90 Gew.-% aus Teppichrücken bestehende Fraktion sowie eine aus wäßriger Salzlösung bestehende flüssige Phase aufgetrennt.

Die Weiterverwertung der Polypropylen-Fraktion, der Polfaser-Fraktion und der Teppichrücken-Fraktion sowie die prozeßinterne Wiederverwendung der flüssigen Phasen erfolgen wie zuvor für die bevorzugte Verfahrensweise beschrieben.

Das erfindungsgemäße Verfahren wird vorzugsweise kontinuierlich bei Umgebungstemperatur ausgeführt. Eine diskontinuierliche Arbeitsweise ist möglich, wobei die Suspendierung und Auftrennung der Zwischenfraktion in den für die vorangehenden Prozeßstufen bereits verwendeten Aggregaten, nämlich dem Vorlagebehälter und der Doppelkonus-Vollmantel-Schneckenzentrifuge, erfolgen kann.

### Beispiel:

30,0 kg Teppichboden mit folgender Zusammensetzung:

| | |
|---|---|
| Polyamid-6-Fasern | 40,0 Gew.-% |
| Polypropylen-Trägergewebe | 5,0 Gew.-% |
| Schaumrücken aus kreidehaltigem Styrol-Butadien-Latex (Kreideanteil 62 Gew.-%) | 55,0 Gew.-% |

werden zusammen mit 270 kg Wasser einer Schneidmühle zugeführt. Das Lochblech vor dem Austrag ist mit Bohrungen von 6 mm versehen.

Die austretende Suspension wird in einen mit Rührwerk versehenen Vorlagebehälter gepumpt und mit 300 kg einer wäßrigen, 40,0 Gew.-% CaCl₂ · 2 H₂O und 0,1 g/l Netzmittel enthaltenden Stammlösung gemischt.

Anschließend wird die Suspension einer Doppelkonus-Vollmantel-Schneckenzentrifuge aufgegeben. Die schwerere Teppichrücken-Fraktion (trocken 17,5 kg) wird mit einer Restfeuchte von etwa 20 Gew.-% und die Zwischenfraktion (trocken 12,5 kg) mit einer Restfeuchte von etwa 10 Gew.-% ausgetragen.

Die Zwischenfraktion wird in einem zweiten mit Rührwerk versehenen Vorlagebehälter eingetragen und in 255 kg Wasser suspendiert. Diese Suspension wird einer zweiten Doppelkonus-Vollmantel-Schneckenzentrifuge aufgegeben. Die Polfaser-Fraktion (trocken 11,0 kg) wird mit einer Restfeuchte von etwa 10 Gew.-% und die Trägergewebe-Fraktion (trocken 1,5 kg) mit einer Restfeuchte von etwa 5 Gew.-% ausgetragen.

Die abgetrennten Feststoff-Fraktionen haben, bezogen auf Trockensubstanz, folgende Zusammensetzung:

| **Komponenten** | **Polfaser- Fraktion** | **Trägergewebe- Fraktion** | **Teppichrücken- Fraktion** |
|---|---|---|---|
| Polyamid | 96 Gew.-% | 1 Gew.-% | 5 Gew.-% |
| Polypropylen | 2 Gew.-% | 98 Gew.-% | 1 Gew.-% |
| Kreidehaltiger Styrol-Butadien-Latex | 2 Gew.-% | 1 Gew.-% | 94 Gew.-% |

## Patentansprüche

1. Verfahren zur Auftrennung von vorzerkleinerten Teppichmaterialien in drei Hauptkomponenten, wobei
a) eine wäßrige Teppichsuspension durch Feinzerkleinerung in wäßriger Phase erzeugt wird, wobei in der Suspension die Konzentration an Teppichmaterial 5 bis 50 Gew.-% und die Partikelgröße 3 bis 10 mm beträgt,
b) die Dichte der flüssigen Phase der Suspension aus Stufe a) durch Zugabe einer wäßrigen Salzlösung auf einen Wert eingestellt wird, der zwischen den Dichten von zwei Hauptkomponenten mit benachbarten Dichten liegt, wobei gleichzeitig die Konzentration an Teppichmaterial in der Suspension auf einen Wert im Bereich von 1 bis 15 Gew.-% abgesenkt wird,
c) die Suspension aus Stufe b) in einer Doppelkonus-Vollmantel-Schneckenzentrifuge in eine im wesentlichen aus einer Hauptkomponente bestehende Fraktion und eine im wesentlichen aus den beiden anderen Hauptkomponenten bestehende Zwischenfraktion sowie eine flüssige Phase aufgetrennt wird,
d) die Zwischenfraktion aus Stufe c) in einer wäßrigen Phase suspendiert und die Dichte der flüssigen Phase dieser Suspension auf einen Wert eingestellt wird, der zwischen den Dichten der beiden die Zwischenfraktion bildenden Hauptkomponenten liegt, wobei gleichzeitig die Konzentration an Teppichmaterial in der Suspension auf einen Wert im Bereich von 1 bis 15 Gew.-% eingestellt wird,
e) die Suspension aus Stufe d) in einer Doppelkonus-Vollmantel-Schneckenzentrifuge in zwei, jeweils im wesentlichen aus nur einer Hauptkomponente bestehende Fraktionen sowie eine flüssige Phase aufgetrennt wird,
f) die abgetrennten, im wesentlichen aus jeweils nur einer Hauptkomponente bestehenden Fraktionen der individuellen Weiterverwertung und die flüssigen Phasen der prozeßinternen Wiederverwendung zugeführt werden.

2. Verfahren gemäß Anspruch 1, dadurch gekennzeichnet, daß in mindestens einer der Stufen a) und d) die wäßrige Phase Wasser ist.

3. Verfahren gemäß Anspruch 1 oder 2, dadurch gekennzeichnet, daß die Suspension der Stufe a) 10 bis 30 Gew.-% und die der Stufen b) und d) 3 bis 10 Gew.-% Teppichmaterial mit einer Partikelgröße im Bereich von 5 bis 8 mm enthalten.

4. Verfahren gemäß einem der Ansprüche 1 bis 3, dadurch gekennzeichnet, daß die Hauptkomponenten des Teppichmaterials Polfasern aus Polyamid-6 oder Polyamid-6,6 sowie Polypropylen und mit Kreide gefüllter, synthetischer Kautschuk sind, und die Dichte der flüssigen Phase der Suspension in einer der Stufen b) oder d) auf einen Wert im Bereich von 1,16 bis 1,30 kg/dm³ und in der anderen der Stufen b) oder d) auf einen Wert von etwa 1,0 kg/dm³, gemessen bei 20 °C, eingestellt wird.

5. Verfahren gemäß einem der Ansprüche 1 bis 3, dadurch gekennzeichnet, daß die Hauptkomponenten des Teppichmaterials Polfasern aus Polyethylenterephthalat oder Polybutylenterephthalat sowie Polypropylen und mit Kreide gefüllter synthetischer Kautschuk sind, und die Dichte der flüssigen Phase der Suspension in einer der Stufen b) oder d) auf einen Wert im Bereich von etwa 1,35 bis 1,50 kg/dm³ und in der anderen der Stufen b) oder d), auf einen Wert von etwa 1,0 kg/dm³ (gemessen bei 20 °C) eingestellt wird.

6. Verfahren gemäß einem der Ansprüche 4 oder 5, dadurch gekennzeichnet, daß die wäßrige Salzlösung Kaliumcarbonat oder Calciumchlorid sowie weniger als 0,2 g/l eines Benetzungsmittels und/oder Entschäumers enthält.

7. Verfahren gemäß einem der Ansprüche 4 oder 5, dadurch gekennzeichnet, daß die Fraktionen der Stufe f) zu über 90 Gew.-% aus mit Kreide gefülltem, synthetischem Kautschuk, bzw. zu über 95 Gew.-% aus Polypropylen, bzw. zu über 95 Gew.-% aus Polfasern bestehen, jeweils bezogen auf Trockenmasse.

8. Verfahren gemäß Anspruch 7, dadurch gekennzeichnet, daß die Polypropylen-Fraktion nach der Trocknung zu Granulat, Fasern oder Nadelvliesen verarbeitet wird und die Polfaser-Fraktion zu wiederverwendbaren Monomeren depolymerisiert wird.

9. Verfahren gemäß einem der Ansprüche 1 bis 8, dadurch gekennzeichnet, daß in Stufe b) die Dichte der flüssigen Phase der Suspension auf einen Wert eingestellt wird, der zwischen der höchsten und der zweithöchsten Dichte der Hauptkomponenten liegt, und in Stufe c) eine im wesentlichen aus der spezifisch schwersten Hauptkomponente bestehende Fraktion abgetrennt wird.

10. Verfahren gemäß einem der Ansprüche 1 bis 8, dadurch gekennzeichnet, daß in Stufe b) die Dichte der flüssigen Phase der Suspension auf einen Wert eingestellt wird, der zwischen der niedrigsten und der zweitniedrigsten Dichte der Hauptkomponenten liegt, und in Stufe c) eine im wesentlichen aus der spezifisch leichtesten Hauptkomponente bestehende Fraktion abgetrennt wird.

## Claims

1. Process for separating pre-shredded carpet materials into three main components, wherein
a) an aqueous carpet suspension is produced by finely shredding the material in an aqueous phase, wherein the concentration of carpet material in the suspension is 5 to 50 wt.% and the particle size is 3 to 10 mm,
b) the density of the liquid phase in the suspension from stage a) is adjusted, by adding an aqueous salt solution, to a value which is between the densities of two main components with numerically adjacent densities, wherein the concentration of carpet material in the suspension is simultaneously reduced to a value in the range from 1 to 15 wt.%,
c) the suspension from stage b) is separated, in a double-cone, full-jacketed, helical conveyor centrifuge, into a fraction consisting substantially of one main component and an intermediate fraction consisting substantially of the other two main components, and a liquid phase,
d) the intermediate fraction from stage c) is suspended in an aqueous phase and the density of the liquid phase in this suspension is adjusted to a value which is between the densities of the two main fractions forming the intermediate fraction, wherein the concentration of carpet material is simultaneously adjusted to a value in the range from 1 to 15 wt.%,
e) the suspension from stage d) is separated, in a double-cone, full-jacketed, helical conveyor centrifuge, into two fractions, each consisting substantially of only one main component, and a liquid phase,
f) the separated fractions, each consisting substantially of only one main component, are taken to individual recycling processes and the liquid phases are recycled within the process.

2. Process according to Claim 1, characterised in that, in at least one of stages a) and d), the aqueous phase is water.

3. Process according to Claim 1 or 2, characterised in that the suspension in stage a) contains 10 to 30 wt.% and the suspensions in stages b) and d) contain 3 to 10 wt.% of carpet material with a particle size in the range from 5 to 8 mm.

4. Process according to one of Claims 1 to 3, characterised in that the main components in the carpet material are pile fibres made of polyamide-6 or polyamide-6,6, as well as polypropylene and synthetic rubber filled with chalk, and the density of the liquid phase in the suspension in one of stages b) or d) is adjusted to a value in the range from 1.16 to 1.30 kg/dm³ and in the other of stages b) or d) is adjusted to a value of about 1.0 kg/dm³, measured at 20°C.

5. Process according to one of Claims 1 to 3, characterised in that the main components in the carpet material are pile fibres made of polyethylene terephthalate or polybutylene terephthalate as well as polypropylene and synthetic rubber filled with chalk, and the density of the liquid phase in the suspension in one of stages b) or d) is adjusted to a value in the range from about 1.35 to 1.50 kg/dm³ and in the other of stages b) or d) is adjusted to a value of about 1.0 kg/dm³ (measured at 20°C).

6. Process according to one of Claims 4 or 5, characterised in that the aqueous salt solution contains potassium carbonate or calcium chloride and less than 0.2 g/l of a wetting agent and/or anti-foaming agent.

7. Process according to one of Claims 4 or 5, characterised in that the fractions in stage f) consist of more than 90 wt.% of synthetic rubber filled with chalk, more than 95 wt.% of polypropylene and more than 95 wt.% of pile fibres, each with reference to the dry weight.

8. Process according to Claim 7, characterised in that the polypropylene fraction is processed, after drying, to give granules, fibres or needle non-wovens and the pile fibre fraction is depolymerised to give recyclable monomers.

9. Process according to Claims 1 to 8, characterised in that, in stage b), the density of the liquid phase in the suspension is adjusted to a value which is between the highest and second highest densities of the main components, and, in stage c), a fraction consisting substantially of the most dense main component is isolated.

10. Process according to one of Claims 1 to 8, characterised in that, in stage b) the density of the liquid phase in the suspension is adjusted to a value between the lowest and second lowest densities of the main components and, in stage c), a fraction consisting substantially of the least dense main component is isolated.

## Revendications

1. Procédé pour la séparation de matériaux de tapis prébroyés en trois constituants principaux,
a) une suspension aqueuse de tapis étant produite par broyage fin en phase aqueuse, la concentration en matériau de tapis dans la suspension étant de 5 à 50% en poids et la taille de particules de 3 à 10 mm.
b) la densité de la phase liquide de la suspension de l'étape a) étant ajustée par addition d'une solution aqueuse de sel à une valeur qui est comprise entre les densités des deux constituants principaux présentant des densités voisines, la concentration en matériau de tapis étant simultanément abaissée à une valeur dans le domaine de 1 à 15% en poids
c) la suspension de l'étape b) étant séparée dans une centrifugeuse à vis sans fin -à bol plein- à double cône en une fraction essentiellement constituée d'un constituant principal et en une fraction intermédiaire essentiellement constituée des deux autres constituants principaux ainsi qu'en une phase liquide,
d) la fraction intermédiaire de l'étape c) étant mise en suspension dans une phase aqueuse et la densité de la phase liquide de cette suspension étant ajustée à une valeur qui est comprise entre les densités des deux constituants principaux formant la fraction intermédiaire, la concentration en matériau de tapis dans la suspension étant simultanément ajustée à une valeur dans le domaine de 1 à 15 % en poids,
e) la suspension de l'étape d) étant séparée dans une centrifugeuse à vis sans fin -à bol plein- à double cône en deux fractions chacune essentiellement constituée que d'un constituant principal ainsi qu'en une phase liquide.
f) les fractions séparées, chacune essentiellement constituée que d'un constituant principal étant individuellement recyclées et les phases liquides étant réutilisées de manière interne au procédé.

2. Procédé selon la revendication 1, caractérisé en ce que la phase aqueuse est de l'eau au moins dans une des étapes a) et d).

3. Procédé selon la revendication 1 ou 2, caractérisé en ce que la suspension de l'étape a) contient de 10 à 30% en poids et celles des étapes b) et d) contiennent de 3 à 10% en poids de matériau de tapis avec une taille de particules dans le domaine de 5 à 8 mm.

4. Procédé selon l'une quelconque des revendications 1 à 3, caractérisé en ce que les constituants principaux du matériau de tapis sont des fibres à poils de polyamide-6 ou de polyamide-6,6 ainsi que du polypropylène et du caoutchouc synthétique chargé de craie et la densité de la phase liquide de la suspension dans une des étapes b) ou d) est ajustée à une valeur dans le domaine de 1,16 à 1,30 kg/dm³ et dans l'autre des étapes b) ou d) à une valeur d'environ 1,0 kg/dm³ mesurée à 20°C.

5. Procédé selon l'une quelconque des revendications 1 à 3, caractérisé en ce que les constituants principaux du matériau de tapis sont des fibres à poils de poly(éthylène téréphtalate) ou de poly(butylène téréphtalate) ainsi que du polypropylène et du caoutchouc synthétique chargé de craie, et la densité de la phase liquide de la suspension dans une des étapes b) ou d) est ajustée à une valeur dans le domaine d'environ 1,35 à 1,50 kg/dm³ et dans l'autre des étapes b) ou d) à une valeur d'environ 1,0 kg/dm³ (mesurée à 20°C).

6. Procédé selon l'une quelconque des revendications 4 ou 5, caractérisé en ce que la solution aqueuse de sel contient du carbonate de potassium ou du chlorure de calcium ainsi que moins de 0.2 g/l d'un agent mouillant et/ou d'un agent anti-moussant.

7. Procédé selon l'une quelconque des revendications 4 ou 5, caractérisé en ce que les fractions de l'étape f) sont constituées jusqu'à plus de 90% en poids de caoutchouc synthétique charge de craie, respectivement jusqu'à plus de 95% en poids de polypropylène, respectivement jusqu'à plus de 95% en poids de libres à poils, rapportés à chaque fois à la masse sèche.

8. Procédé selon la revendication 7, caractérisé en ce que la fraction de polypropylène est transformée après le séchage en granulés, en libres ou en non-tissés et la fraction de fibres à poils est dépolymérisée en monomères réutilisables.

9. Procédé selon l'une quelconque des revendications 1 à 8, caractérisé en ce que dans l'étape b) la densité de la phase liquide de la suspension est ajustée à une valeur qui est comprise entre la densité la plus élevée et la seconde densité la plus élevée des constituants principaux, et dans l'étape c) une fraction essentiellement constituée du constituant principal spécifiquement le plus lourd est séparée.

10. Procédé selon l'une quelconque des revendications 1 à 8, caractérisé en ce que dans l'étape b) la densité de la phase liquide de la suspension est ajustée à une valeur qui est comprise entre la densité la plus faible et la seconde densité la plus faible des constituants principaux, et dans l'étape c) une fraction essentiellement constituée du constituant principal spécifiquement le plus léger est séparée.
